# EUROPÄISCHE PATENTANMELDUNG

(11) **EP 1 548 942 A1**
(43) Veröffentlichungstag der Anmeldung: **29.06.2005**
(21) Anmeldenummer: 04017591.1
(22) Anmeldetag: 24.07.2004
(51) Int. Cl.: H03K 17/95

(54) **Magnetisches Sensorsystem**

(30) Priorität: 08.10.2003 DE 20315448 U
(71) Anmelder: Bernstein AG, 32457 Porta Westfalica (DE)
(72) Erfinder: Wedemeyer, Torsten Dipl.-Ing., 32457 Porta Westfalica (DE)
(74) Vertreter: Dantz, Jan Henning

(57) **Zusammenfassung**

Ein magnetisches Sensorsystem, insbesondere für Tranportsysteme, umfasst einen ferromagnetischen Geber, der relativ zu einem magnetischen Sensor (3) bewegbar ist, wobei der magnetische Sensor (3) in den Magnetfeldern von mindestens zwei benachbarten Magneten (4, 5) angeordnet ist, in deren Magnetfeld der Geber bewegbar ist. Dabei sind die Magnetfelder vorzugsweise als zwei überlappende Keulen ausgebildet sind, womit die Positionierung des Gebers besonders gut erfasst werden kann.

## Beschreibung

Die vorliegende Erfindung betrifft ein magnetisches Sensorsystem, insbesondere für Transportsysteme, mit einem ferromagnetischen Geber, der relativ zu einem magnetischen Sensor bewegbar ist.

Es gibt Sensoren mit induktivem Wirkprinzip mit denen elektrisch leitfähigen Materialien detektiert werden. Durch ihre hohe einstellbare Empfindlichkeit lassen sich meist große Arbeitsluftspalte realisieren. Induktive Sensoren weisen allerdings den Nachteil auf, dass sie durch nicht-ferromagnetische metallische Anlagenteile wie beispielsweise Aluminium beeinflusst werden können. Da ein solcher Sensor aufgrund der Anordnung des Signalgebers eine breite sensitive Spur quer zur Bewegungsrichtung aufweisen muss, führt dies zu einer relativ großen Bauform. Bei induktiven Sensoren ist die maximale Schaltfrequenz von der Baugröße des Sensors abhängig. Die Mindestanforderungen an die Schaltfrequenz werden durch eine induktive Lösung nicht erreicht.

Weitere handelsübliche Näherungsschalter sind mit einer Komparatorschaltung ausgestattet, die einen absoluten Sollwert mit einem absoluten Istwert vergleicht. Diese Näherungsschalter haben den Nachteil, dass die Empfindlichkeit des Sensors und das Tastverhältnis temperaturabhängig ist. Ferner müssen die Sensoren abgeglichen werden.

Es ist daher Aufgabe der vorliegenden Erfindung ein magnetisches Sensorsystem zu schaffen, das ein hohes Maß an Empfindlichkeit und einen einfachen Aufbau bei geringer Baugröße besitzt.

Diese Aufgabe wird mit einem magnetischen Sensorsystem mit den Merkmalen des Anspruches 1 gelöst.

Erfindungsgemäß ist der magnetische Sensor in den Magnetfeldern von mindestens zwei benachbarten Magneten angeordneten, in deren Magnetfeld der Geber bewegbar ist. Durch die Anordnung des Sensors in dem statischen Magnetfeld wird bei Bewegung des Gebers in das Magnetfeld ab einem vorgegebenen Schwellwert ein Signal erzeugt, mit dem die Positionierung des Gebers erfasst wird. Durch die Näherung des ferromagnetischen Gebers wird das homogene Magnetfeld gestört. Die Ablenkung der homogenen Feldlinien führt zu einer auswertbaren Signalamplitude. Dabei ist es unerheblich, welches der mindestens zwei Magnetfelder durch den Geber beeinflusst wird. Die resultierende Signalamplitude ist unabhängig von der Überdeckung zwischen dem Sensor und dem Geber, solange diese Signalamplitude erfasst wird.

Für ein besonders einfach aufgebautes Sensorsystem sind die Magnetfelder als zwei überlappende Keulen ausgebildet. Durch die Keulen wird eine vergleichsweise große Reichweite relativ zur Baugröße des Sensorsystems erhalten.

Vorzugsweise ist der Sensor als Hall-Sensor ausgebildet. Bei dem Hall- Sensor handelt es sich um ein analoges Element, bei dem die Ausgangsspannung proportional zur magnetischen Flussdichte ist. Ein solcher Hall-Sensor eignet sich besonders für den Einsatz bei kontaktlosen Schaltern.

Für eine kompakte Bauweise sind zwei Magnete vorgesehen, zwischen denen der Sensor mittig im Bereich paralleler Feldlinien angeordnet ist. Es können auch mehr als zwei Magnete vorgesehen werden, beispielsweise vier Magnete. Es ist auch möglich, dass eine Vielzahl von Magneten den Sensor ringförmig umgibt, beispielsweise wenn die Näherung des Gebers nicht nur von zwei Richtungen sondern mehreren Richtungen erfolgen kann.

Vorzugsweise ist ein Temperaturmesser vorgesehen, und mittels einer Temperaturkompensation ist die Erfassung des Sensors im wesentlichen temperaturabhängig. Denn Sensoren, insbesondere Hall-Sensoren sind an sich temperaturabhängig und die magnetische Flussdichte der Magnete nimmt mit zunehmender Temperatur ab, weshalb eine Kompensation erforderlich ist. Durch eine entsprechende Temperaturkompensation lassen sich die Temperatureinflüsse für das Sensorsystem minimieren.

Vorzugsweise liegt die Schaltfrequenz des Sensors über 5 kHz, insbesondere über 10 kHz. Eine solch hohe Schaltfrequenz wird mit den meisten induktiven Lösungen nicht erreicht.

Der Arbeitsluftspalt zwischen Sensor und Geber liegt vorzugsweise in einem Bereich zwischen 1 und 14 mm, sodass ein ausreichender Toleranzausgleich durch das Sensorsystem erfolgen kann.

Das Sensorsystem kann zusätzlich eine mikrocontroller-gesteuerte Auswerteelektronik umfassen, mit der das Sensorsystem zu einem gewissen Grad auch lernfähig ausgebildet sein kann.

Die Erfindung wird nachfolgend anhand eines Ausführungsbeispiels mit Bezug auf die beigefügten Zeichnungen näher erläutert. Es zeigen:
- Figur 1: eine perspektivische Ansicht eines erfindungsgemäßen Sensorsystems;
- Figur 2: eine schematische Draufsicht auf das Sensorsystem der Figur 1;
- Figur 3: eine Darstellung des magnetischen Feldes des Sensorsystems der Figur 1 ohne Geber, und
- Figur 4: eine Darstellung des magnetischen Feldes des Sensorsystems der Figur mit Geber.

Ein Sensorsystem 1 umfasst ein Gehäuse 2, in dem ein Hall-Sensor 3 montierbar ist. In dem Gehäuse 2 ist ein erster Magnet 4 und ein zweiter Magnet 5 untergebracht. Der Hall-Sensor 3 und die Magneten 4 und 5 werden durch einen Formkörper 6 fixiert, der eine Aussparung 7 für den Magneten 4 und eine Aussparung 8 für den Magneten 5 sowie bodenseitig eine Aussparung für den Hall-Sensor 3 aufweist. Der Hall-Sensor ist dabei über Leitungen 9 mit einer Leiterplatte 10 verbunden, auf der Eine Auswerteelektronik angeordnet sein kann.

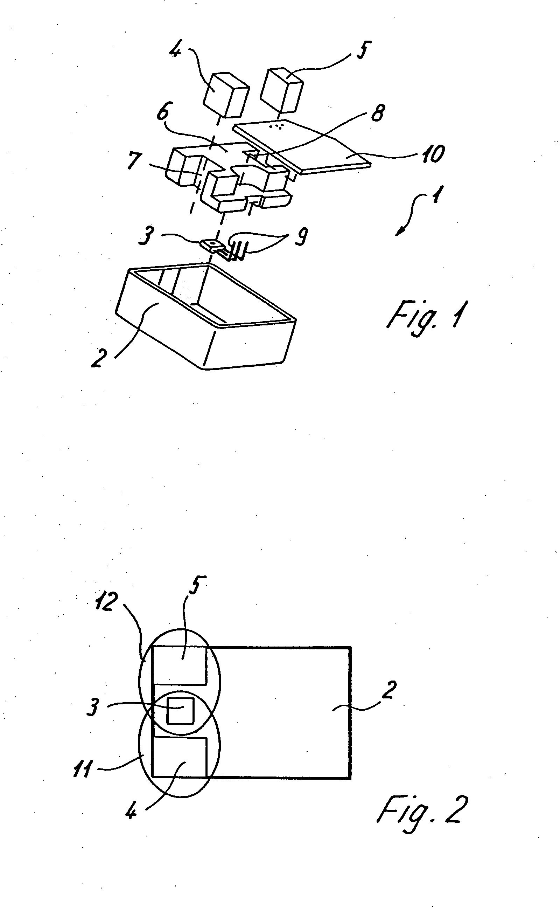

Wie in Figur 2 gezeigt ist, befindet sich der Hall-Sensor 3 zwischen den Magneten 4 und 5. Der Magnet 4 erzeugt dabei ein keulenförmiges Magnetfeld 11, das den Hall-Sensor 3 einschließt. Auf ähnliche Weise erzeugt der Magnet 5 ein keulenförmiges Magnetfeld 12, das den Hall-Sensor 3 ebenfalls einschließt. Bei dem dargestellten Sensorsystem sind die Magneten 4 und 5 bzw. Magnetfelder 11 und 12 symmetrisch ausgebildet.

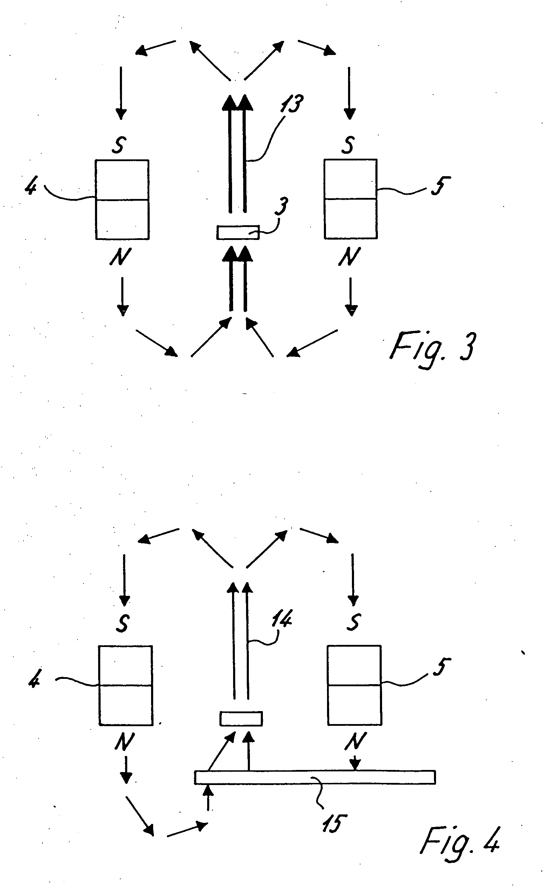

Wie in Figur 3 gezeigt ist, erzeugen die Magnete 4 und 5 durch entsprechende Pole ein homogenes Magnetfeld, dessen Magnetfeldlinien schematisch mit Pfeilen 13 dargestellt sind. Der Hall-Sensor 3 befindet sich mittig zwischen den Magneten 4 und 5, wobei sich dort die beiden Magnetfelder durch die Magneten 4 und 5 überlagern.

Bewegt sich ein ferromagnetischer Geber 15 in eines der Magnetfelder der Magneten 4 und 5 (Figur 4) wird das homogene Magnetfeld gestört. Die Ablenkung der homogenen Feldlinien führt zu einer auswertbaren Signalamplitude am Hall-Sensor. Dabei ist unerheblich, welches der dargestellten keulenförmigen Magnetfelder durch den Geber 15 abgelenkt wird. Der Hall-Sensor kann die Ablenkung des Magnetfeldes jedoch detektieren.

Falls die Richtung des ferromagnetischen Gebers 15 festgestellt werden soll, können beispielsweise zwei oder mehr Sensorsysteme benachbart zueinander angeordnet werden, sodass die Richtung des Gebers 15, bei Bedarf auch die Geschwindigkeit gemessen werden kann.

Durch die Verringerung der Feldlinienkonzentration und der magnetischen Flussdichte entsteht am Hall-Sensor eine Ausgangsspannungsänderung, die beispielsweise zwischen 60 mV und 300 mV, je nach Arbeitsluftspalt liegen kann.

Da die Empfindlichkeit des Hall-Sensors temperaturabhängig ist und die magnetische Flussdichte der Magnete 4 und 5 mit zunehmender Temperatur abnimmt, kann das System mit einer Temperaturkompensation ausgerüstet sein. Nachdem eine Temperaturkompensation durch eine einfache Temperaturmessung nicht möglich ist, kann mittels einer Auswerteelektronik die Temperaturabhängigkeit vermindert werden. Hierfür kann ein implementierter Algorithmus die Signalpegeländerung dU/dT auswerten. Es werden also Signaländerungen bestimmter Amplitude in einem definierten Zeitraum ausgewertet. Pegeländerungen in die eine Richtung stehen für die Erkennung eines Gebers und Signalflanken in die entgegengesetzte Richtung werden als Ausschaltpunkt erkannt.

Wird nur ein verhältnismäßig kleines dU/dT erkannt, wird durch die Software ein Temperaturkompensationsmechanismus ausgelöst. Pegeländerungen, die durch Temperaturdrift hervorgerufen werden, sind aufgrund ihres zeitlichen Verlaufes eindeutig von dynamischen Pegeländerungen, hervorgerufen durch einen sich bewegenden Geber, zu unterscheiden. Durch diesen Algorithmus werden Einflüsse durch Temperaturdrift und Bauteiletoleranzen nahezu vollständig ausgeblendet.

Da der Sensor ausschließlich Signalflanken auswertet, ist keine Kalibrierung des Sensors erforderlich. Der Sensor leitet aus der Einschaltpegeldifferenz den Luftspalt ab und berechnet daraus den erforderlichen Ausschaltpegel. Das führt bei der Anwendung mit parallel zur Detektionsfläche geführten Gebern zu einem nahezu luftspalt-unabhängigen Tastverhältnis.

Das gezeigte Sensorsystem besitzt dadurch eine geringe Baugröße und eine hohe elektromagnetische Verträglichkeit. Nicht-ferromagnetische Metalle beeinträchtigen die Genauigkeit des Sensorsystems nicht.

In dem dargestellten Ausführungsbeispiel sind lediglich zwei Magnete um den Sensor angeordnet. Es ist natürlich möglich, auch drei, vier oder mehr Magnete um den Sensor beispielsweise ringförmig zu positionieren.

## Patentansprüche

1. Magnetisches Sensorsystem, insbesondere für Tranportsysteme, mit einem ferromagnetischen Geber (15), der relativ zu einem magnetischen Sensor (3) bewegbar ist, **dadurch gekennzeichnet, dass** der magnetische Sensor (3) in den Magnetfeldern (11, 12) von mindestens zwei benachbarten Magneten (4, 5) angeordnet ist, in deren Magnetfeld (11, 12) der Geber (15) bewegbar ist.

2. Sensorsystem nach Anspruch 1, **dadurch gekennzeichnet, dass** die Magnetfelder (11, 12) als zwei überlappende Keulen ausgebildet sind.

3. Sensorsystem nach Anspruch 1 oder 2, **dadurch gekennzeichnet, dass** der Sensor (3) als Hall-Sensor ausgebildet ist.

4. Sensorsystem nach einem der Ansprüche 1 bis 3, **dadurch gekennzeichnet, dass** mittels dem Sensor (3) ausschließlich Signalflanken auswertet werden.

5. Sensorsystem nach einem der Ansprüche 1 bis 4, **dadurch gekennzeichnet, dass** zwei Magneten (4, 5) vorgesehen sind, zwischen denen der Hall-Sensor (3) mittig im Bereich paralleler Feldlinien angeordnet ist.

6. Sensorsystem nach einem der Ansprüche 1 bis 5, **dadurch gekennzeichnet, dass** ein Temperaturmesser vorgesehen ist, und mittels einer Temperaturkompensation die Erfassung des Sensors (3) im wesentlichen Temperaturunabhängig ist.

7. Sensorsystem nach einem der Ansprüche 1 bis 6, **dadurch gekennzeichnet, dass** die Schaltfrequenz des Sensors über 5 kHz, vorzugsweise über 10 kHz, liegt.

8. Sensorsystem nach einem der Ansprüche 1 bis 7, **dadurch gekennzeichnet, dass** der Arbeitsluftspalt zwischen Sensor (3) und Geber (15) in einem Bereich zwischen 1 und 14 mm liegt.

9. Sensorsystem nach einem der Ansprüche 1 bis 8, **dadurch gekennzeichnet, dass** das Sensorsystem eine mikrokontroll-gesteuerte Auswerteelektronik umfasst.

10. Sensorsystem nach einem der Ansprüche 1 bis 9, **dadurch gekennzeichnet, dass** eine Signalauslösung bei einer Überdeckung des Gebers (15) von mindestens 60 % erfolgt.
